# EUROPEAN PATENT APPLICATION

(11) **EP 1 835 416 A2**
(43) Date of publication of application: **19.09.2007**
(21) Application number: 07104026.5
(22) Date of filing: 13.03.2007
(51) Int. Cl.: G06F 17/21

(54) **Method and Apparatus for Inputting Text Effect Item**

(30) Priority: 14.03.2006 KR 20060023605
(71) Applicant: Samsung Electronics Co., Ltd., Suwon-si, Gyeonggi-Do (KR)
(72) Inventor: Lee, Dong-Kook C/O SAMSUNG ELECTRONICS CO. LTD., Gyeonggi-do (KR)
(74) Representative: Grünecker, Kinkeldey, Stockmair & Schwanhäusser Anwaltssozietät

(57) **Abstract**

A function is implemented for inputting a text effect item to place various effects on text when the text is edited. By using the function, a user can easily select a text effect item for personalizing text in a text editing mode by reducing a panel in which at least one text effect item is disposed, adding the reduced panel to a portion of a cursor image indicating a text input location, and magnifying the panel if a text effect item input request is input by the user. By adding zoom-in and zoom-out functions, the panel added to the cursor can be magnified and reduced when a text effect item is input. Accordingly, by viewing a method of inputting a text effect item, user-friendliness can be increased, and entertainment elements can be added to a user interface of a mobile communication terminal when the text is edited.

## Description

The present invention relates generally to a mobile communication terminal, and in particular, to a method and apparatus for easily inputting a text effect item in order to place various personalized effects on text when editing the text using a mobile communication terminal.

With the rapid increase of the use of mobile communication terminals, numerous functions in addition to the phone call function have been provided. One of the additional functions is a message transfer function to transfer a relatively short text message to a target mobile communication terminal or a personal computer (PC). A desired message can be edited using the message transfer function regardless of a communication state of the target mobile communication terminal. Since a message can be transferred almost as quickly as a send time, the message transfer function is frequently implemented for communication. Additional functions using a mobile communication terminal to send or receive mail through the Internet or PC communication and to search information are also widely used.

Since information is provided interactively for user convenience, the message transfer function is easy to use by all. In addition, some consumers enjoy sending and receiving messages to and from friends with various types of personalized text-emoticons.

However, since screen sizes are relatively small and only a few keys are used when text is input and transferred using a mobile communication terminal, inputting and sending many characters can be quite complicated. Thus, much time and effort can be required even to input a short text. Furthermore, short texts are usually extensively abbreviated, and thus vague and difficult to understand.

Mobile communication terminals developed to solve this problem allow users to use various expressions by providing a mode to input simple and general characters, such as Korean, English, numbers and special characters. However, even these terminals require the user to follow a complex input process in order to input a single special character. This process can involve changing an input mode, searching for the desired special character and selecting an OK key. If the user also wants to input an image, the user must open a separate dialog box using an attached file menu and select the image in the dialog box. As described above, every time a message is edited, the user can complete the message only after performing complicated menu selection processes as if the user uses a hierarchical user interface (UI).

Furthermore, even though user demands in mobile communication terminals are steadily increasing, various emotions cannot be easily expressed in messages since an image and/or sound can only be added in an attached file form to a message currently in use,.

As described above, in a conventional mobile communication terminal, since an input mode is changed several times in order for a user to input various personalized emotions. Accordingly, there is needed a method for allowing a user to more conveniently input a personalized text effect item.

The present invention has been designed to substantially solve at least the above problems and/or disadvantages and to provide at least the advantages below. Accordingly, the object of the present invention is to provide a method and apparatus for inputting a text effect item, whereby the text effect item can be easily input in order to place various personalized effects on text when editing the text using a mobile communication terminal.
This object is solved by the subject matter of the independent claims.
Preferred embodiments are defined by the subject matter of the dependent claims.

According to the present invention, there is provided a method of inputting a text effect item on a text, including displaying a text cursor in a text input window when the text input window is activated in a text editing mode, the text cursor obtained by reducing a panel in which at least one text effect item is disposed and adding the reduced panel to a portion of a cursor image indicating a text input location, determining whether a zoom-in request for the text cursor panel is input, magnifying the panel of the text cursor if it is determined that the zoom-in request is input, and reducing the panel to the initial size and displaying the selected text effect item in the text input window if a particular text effect item is selected from the panel.

According to the present invention, there is provided an apparatus for inputting a text effect item on a text, including a user interface, which provides key input data according to a text input and has a zoom-in key and a zoom-out key, a controller for displaying a text cursor in a text input window when the text input window is activated in a text editing mode, the text cursor obtained by reducing a panel in which at least one text effect item is disposed and adding the reduced panel to a portion of a cursor image indicating a text input location, magnifying the panel of the text cursor if a zoom-in request is input, and reducing the panel to the initial size and displaying the selected text effect item in the text input window if a particular text effect item is selected from the panel, and a display unit for displaying the input text and the selected text effect item in the text input window while displaying the text cursor in the text input location under a control of the controller.

The present invention will become more apparent from the following detailed description when taken in conjunction with the accompanying drawing in which:
FIG. 1 is a block diagram of a mobile communication terminal to which the present invention is applied;
FIGs. 2A to 2D illustrate state variations of a screen on which text is input according to the present invention;
FIG. 3 illustrates a panel of a text cursor according to the present invention;
FIGs. 4A and 4B illustrate a process of selecting a text effect item according to the present invention;
FIG. 5A illustrates states according to whether a special character is activated or deactivated according to the present invention;
FIG 5B illustrates states according to whether an image is activated or deactivated according to the present invention;
FIG. 6 illustrates a screen on which a clipboard is added on a panel according to the present invention; and
FIG. 7 is a flowchart illustrating a method of inputting a text effect item in a mobile communication terminal according to the present invention.

Preferred embodiments of the present invention will be described herein below with reference to the accompanying drawings. In the drawings, the same or similar elements are denoted by the same reference numerals even though they are depicted in different drawings. In the following description, well-known functions or constructions are not described in detail for the sake of clarity and conciseness.

The present invention implements a function for easy input of a text effect item on a text when the text is edited. By using the function, a user can easily select a text effect item for putting a visual effect on a text in a text editing mode by reducing a panel in which at least one text effect item is disposed, adding the reduced panel to a portion of a cursor image indicating a text input location, and magnifying the panel if a text effect item input request is input by the user. By adding zoom-in and zoom-out functions, the panel added to the cursor can be magnified and reduced when a text effect item is input. Accordingly, by visually viewing a method of inputting a text effect item, user-friendliness can be increased, and entertainment elements can be added to a user interface of a mobile communication terminal when the text is edited.

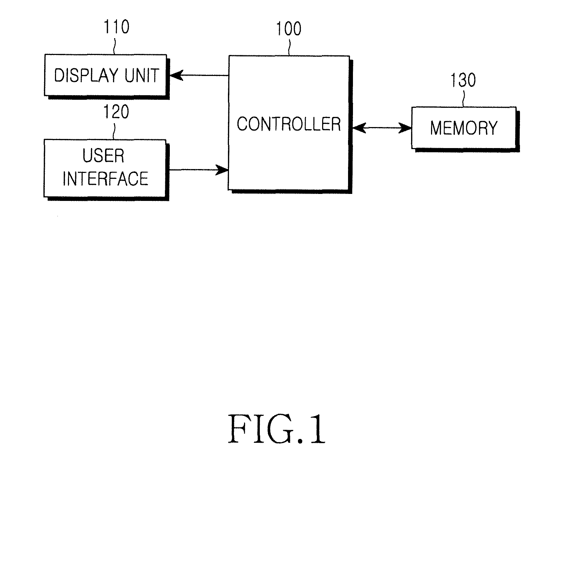

FIG. 1 is a block diagram of a mobile communication terminal to which the present invention is applied. Referring to FIG. 1, the mobile communication terminal includes a controller 100, a display unit 110, a user interface 120 and a memory 130.

When a text effect item input request is input by a user in a text editing mode, i.e., when a zoom-in request is input, the controller 100 magnifies a panel added to a cursor. In the panel, various text effect items are disposed, including special characters, images having high user preference and sounds. When a particular text effect item is selected by the user, the controller 100 displays the selected text effect item on the display unit 110. In the present invention, a graphic input device (GID) cursor is additionally included to select any of all objects including the text effect items and operates based on a rollover function. The GID cursor is used to select any of objects displayed on the display unit 110, acts as a mouse cursor, and has a cross shape. In the rollover function in the present invention, when the GID cursor is placed on or passes over a specific portion displayed on the display unit 110, such as an image, a button or menu, a frame color of the specific portion is changed or shadowed.

If the user moves the GID cursor on the panel, the controller 100 changes the display of the button corresponding to the special character, image, or sound located at the moved location. When a selection key is pressed by the user, the controller 100 reduces the magnified panel to the initial size and displays the text effect item on which the GID cursor is located in a text input window. When the zoom-out function is selected by the user, the controller 100 reduces the size of the magnified panel and displays the text effect item the same as if the selection key is pressed.

The display unit 110 displays data corresponding to key input data input from the user interface 120 or displays an operational state and various information of the mobile communication terminal using icons and characters under a control of the controller 100. In addition, when the user sets or operates a desired function, the display unit 110 visually views a state of the setting or operation under a control of the controller 100. According to the present invention, the display unit 110 displays the panel used to easily input various text effect items for personalizing text by magnifying or reducing the size of the panel according to the zoom-in or zoom-out function selected by the user. If the display unit 110 is formed in a touch screen type, the display unit 110 acts as the user interface 120 to transfer a control signal for movement or selection of a text effect item from the user to the controller 100. If the display unit 110 is implemented as a touch screen, a plurality of number, function and direction keys displayed on the touch screen can be selected using an input device such as a stylus pen.

The user interface 120 includes a plurality of number and function keys and outputs key input data corresponding to a key selected by the user to the controller 100. The user interface 120 includes zoom-in and zoom-out keys for respectively magnifying and reducing the panel in which various text effect items are disposed. The zoom-in and zoom-out keys can be implemented using separate keys or existing function keys for performing other functions, which are included in the user interface 120. The zoom-in and zoom-out keys can also be implemented using pre-mapped key combinations.

The memory 130 includes read only memory (ROM) and random access memory (RAM) for storing a plurality of programs and data, and in particular, stores the various text effect items displayed on the panel and information regarding the various text effect items. Based on the information, the controller 100 can dispose frequently used special characters, images and sounds on the panel according to user preference so that the user can easily input a desired text effect item. Each text effect item includes at least one of special characters, images and sounds, and the text effect items can be added or removed.

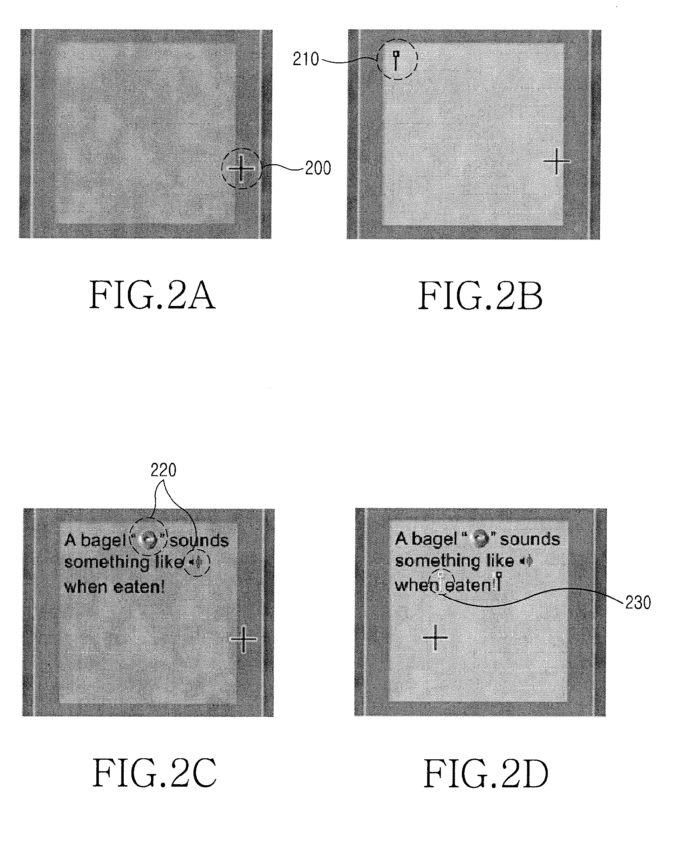

FIGs. 2A to 2D illustrate state variations of a screen on which text is input according to the present invention. FIG 2A shows a deactivated state of a text input window when a GID cursor 200 is located out of the text input window. When the GID cursor 200 is located in the text input window as illustrated in FIG. 2B, the text input window is activated, and a text cursor indicating a text input location appears as indicated by reference numeral 210. FIG. 2B shows an activated state of the text input window with a changed color when the GID cursor 200 is moved into the text input window. FIG. 2C shows a case where the GID cursor 200 is moved out of the text input window while the text is being input. In this case, the text input window is deactivated and the text cursor disappears. The user can insert desired image and sound as indicated by reference numeral 220 of FIG. 2C in order to place a visual effect on the text while the text is input.

FIG 2D illustrates a case where a text effect item is input. If the user moves the GID cursor 200 in the text input window, the text cursor indicating a text input location appears. In this case, the user can input a text effect item any time while inputting the text. A detailed method of inputting a text effect item will be described later. A ghost text cursor having a faint color, which is displayed as indicated by reference numeral 230 in FIG 2D, can be a reference location when a portion of input text is dragged to a location at which the text cursor is currently located.

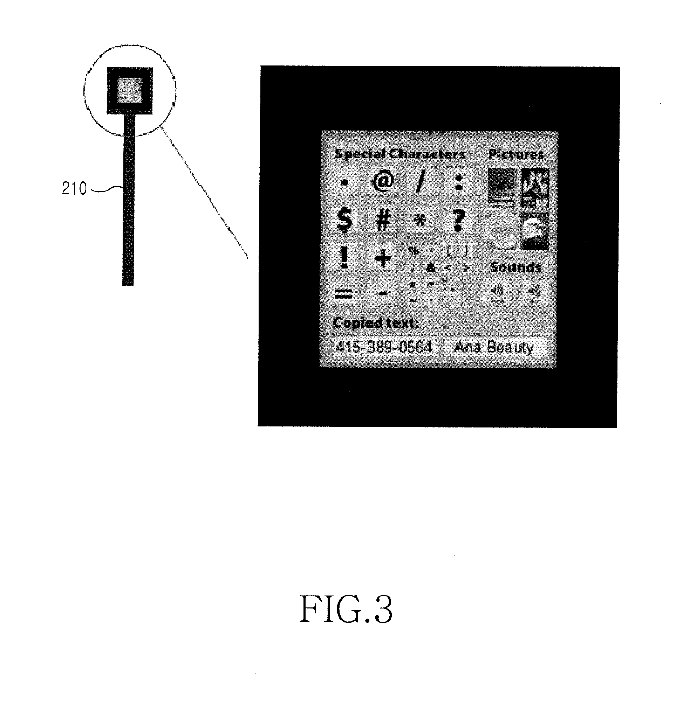

The text cursor 210 illustrated in FIG. 2B has a form illustrated in FIG. 3, which illustrates a panel of the text cursor 210 according to the present invention.

In FIG. 3, the text cursor 210 is a small rectangle attached above a bar, and a panel in which at least one text effect item is disposed is located in a portion of the rectangle. When the panel is magnified using the zoom-in function, text effect items such as special characters, images and sounds, as well as a clipboard are disposed on the panel. That is, the panel can be zoomed in or out, and the user can select or edit a desired text effect item using the panel.

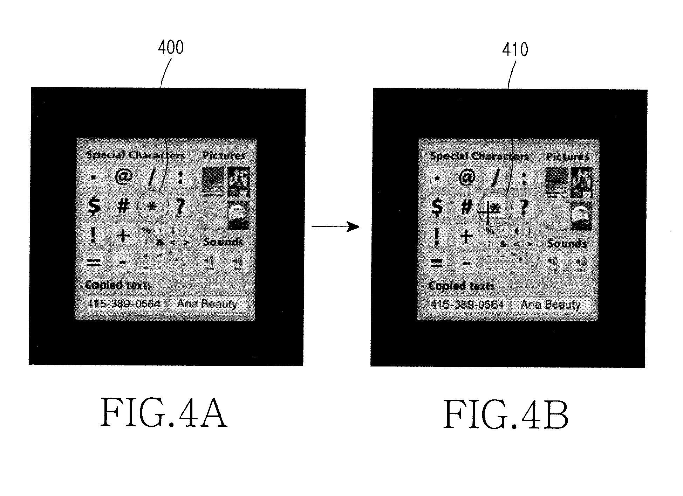

FIG. 4A illustrates a case in which a GID cursor is out of the panel. In order to select a desired text effect item from the panel illustrated in FIG. 4A, the user should move the GID cursor on the panel as illustrated in FIG. 4B. When the GID cursor is moved over the panel, a text effect item, e.g., an asterisk- shaped special character, indicated by reference numeral 410 of FIG. 4B is activated and displayed.

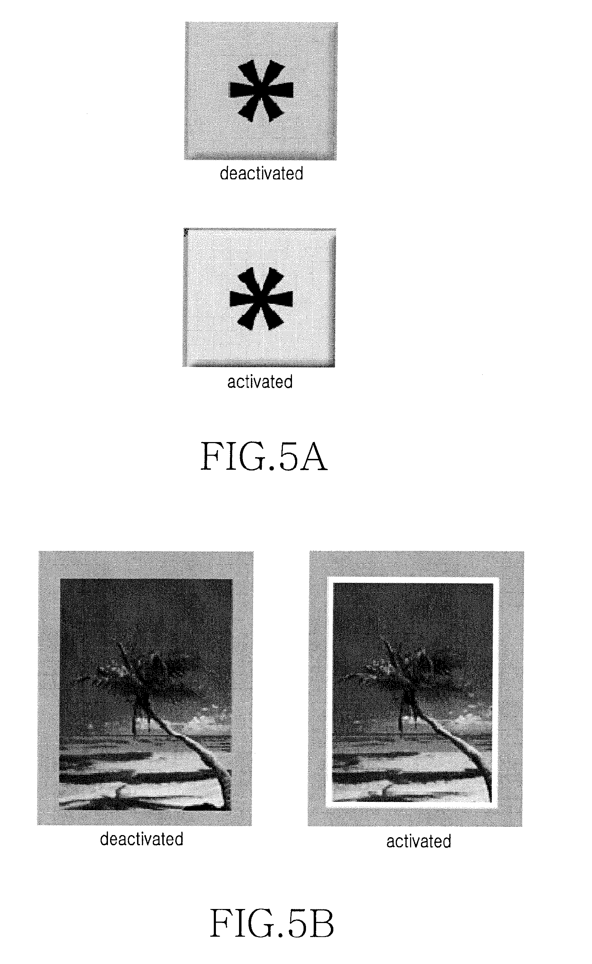

FIG 5A illustrates states according to whether a special character is activated or deactivated according to the present invention. As compared to reference numeral 400 of FIG. 4A, when the GID cursor is not located on the asterisk- shaped special character, the asterisk- shaped special character is displayed with a dark color to indicate a deactivated state as illustrated in FIG. 5A, and when the GID cursor is located on the asterisk- shaped special character, the asterisk shaped special character is displayed with a bright color to indicate an activated state, as also illustrated in FIG. 5A.

FIG 5B illustrates states according to whether an image is activated or deactivatedaccording to the present invention. In FIG. 5B, when the GID cursor is not located on a desired image, the image is displayed as normal to indicate deactivated, and when the GID cursor is located on the desired image, a frame color of the image is changed, indicating activated. As described above, by changing a color of a desired text effect item according to movement of the GID cursor, the user can recognize which text effect item is activated.

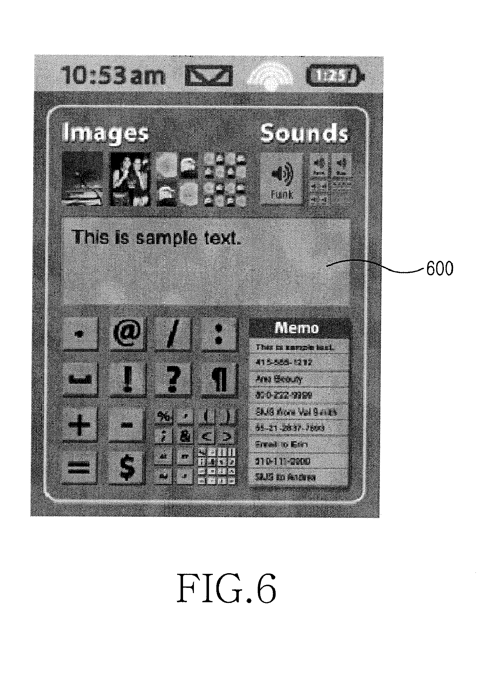

FIG 6 illustrates a screen on which a clipboard 600 is added on a panel according to the present invention. Referring to FIG 6, the clipboard 600 is additionally provided in order for a user to input a plurality of text effect items at once. The clipboard 600 is activated when a GID cursor is located on the clipboard 600, and the user can select desired text effect items and input the selected text effect items in the clipboard 600.

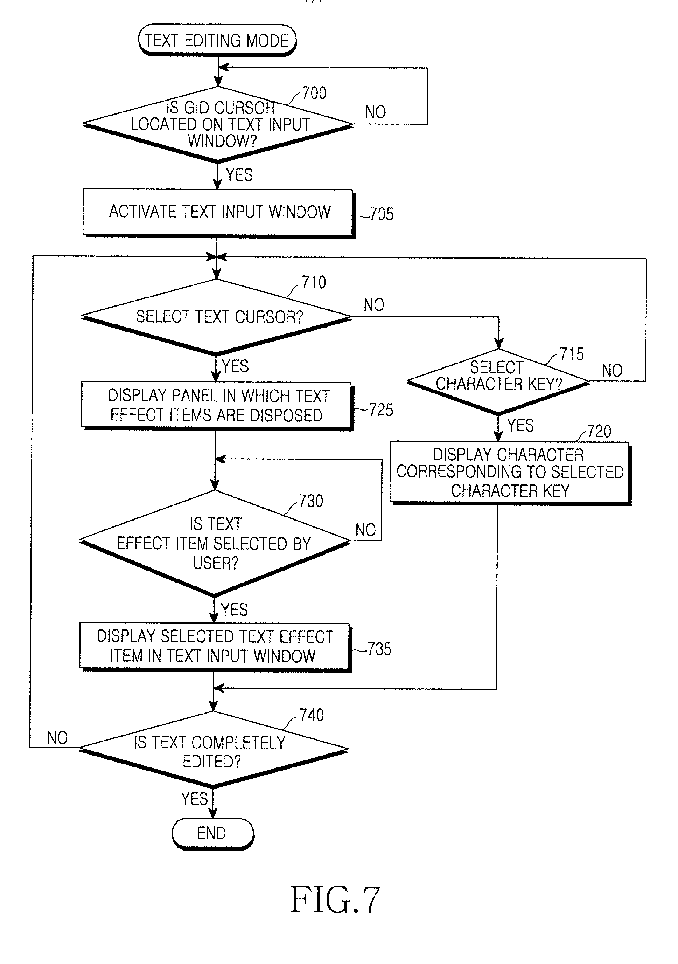

FIG. 7 is a flowchart illustrating a method of inputting a text effect item in a mobile communication terminal according to the present invention.

Referring to FIG 7, in the text- editing mode, the mobile communication terminal determines in step 700 whether a GID cursor is located in a text input window by a user. If it is determined in step 700 that the GID cursor is located in the text input window, the mobile communication terminal activates the text input window in step 705. That is, the mobile communication terminal changes a color of the text input window to bright and displays a text cursor indicating a text input location in the text input window. The mobile communication terminal determines in step 710 whether the user selects the text cursor using the GID cursor in order to place various effects on text. The user can input a text effect item by magnifying a panel of the text cursor in which various text effect items are disposed without changing a text input mode, and the magnification of the panel can be achieved by selecting a zoom-in key when the GID cursor is located on the panel of the text cursor. Accordingly, the text cursor is selected. Alternatively, when the GID cursor is not located on the panel of the text cursor, the panel of the text cursor can be magnified when the user selects the zoom-in key while inputting text.

If it is determined in step 710 that the text cursor is not selected in a state where the text input window is activated, the mobile communication terminal determines in step 715 whether a character key is selected. If it is determined in step 715 that a character key is selected, the mobile communication terminal displays a character corresponding to the selected character key in the text input window. The mobile communication terminal determines in step 740 whether the text is completely edited. If it is determined in step 740 that the text is not completely edited, this process goes back to step 710 to determine whether another key is selected within a predetermined time.

If it is determined in step 710 that the text cursor is selected, i.e., if a request for zooming in the panel of the text cursor is input by the user, the mobile communication terminal magnifies the panel on which various text effect items are displayed in step 725, as illustrated in FIG. 3. The mobile communication terminal determines in step 730 whether a text effect item is selected by the user. If it is determined in step 730 that a text effect item is selected, the mobile communication terminal displays the selected text effect item in the text input window in step 735, and the mobile communication terminal repeatedly performs steps 710 to 740 until it is determined in step 740 that the text is completely edited. Herein, the user can select a desired text effect item on the panel by moving and placing the GID cursor on the desired text effect item.

As described above, the user can magnify the special characters, images, sounds, and the clipboard by zooming in the panel of the text cursor, and when the user selects the zoom-out function when the GID cursor is located on a desired text effect item, the panel is reduced, and the desired text effect item is displayed in the text input window. By using this method, the user can easily input a text effect item to personalize text. Furthermore, in a method of easily inputting a text effect item by adding zoom-in and zoom-out functions when text is edited, an entertainment element can be added to a user interface of a mobile communication terminal.

While the invention has been shown and described with reference to a certain preferred embodiment thereof, it will be understood by those skilled in the art that various changes in form and details may be made therein without departing from the scope of the invention as defined by the appended claims.

## Claims

1. A method of inputting a text effect item to place various effects on text, the method comprising the steps of:
displaying a text cursor in a text input window when a text input window is activated in a text editing mode, the text cursor obtained by reducing an initial size of a panel in which at least one text effect item is disposed and adding the reduced panel to a portion of a cursor image indicating a text input location;
determining whether a zoom-in request with respect to the panel of the text cursor is input;
magnifying the size of the panel of the text cursor if it is determined that the zoom-in request is input; and
reducing the panel to the initial size and displaying the selected text effect item in the text input window if a particular text effect item is selected from the panel.

2. The method of claim 1, wherein the text effect item includes at least one of special characters, images and sounds.

3. The method of claim 1 or 2, wherein a clipboard for simultaneously inputting a plurality of text effect items is disposed in the panel of the text cursor.

4. The method of one of claims 1 to 3, further comprising:
moving a graphic input device cursor for selecting an object displayed on a screen according to a user's selection; and
activating the text input window when the moved graphic input device cursor is located on the text input window.

5. The method of one of claims 1 to 4, wherein the text input window is activated by changing a color of the text input window.

6. The method of claim 4, wherein the graphic input device cursor operates based on a rollover function and is a cursor for selecting a text effect item in the panel.

7. The method of one of claims 1 to 3, further comprising:
moving a graphic input device cursor for selecting a text effect item in the panel of the text cursor according to a user's selection when the size of the panel of the text cursor is magnified; and
activating a particular text effect item in the panel of the text cursor when the moved graphic input device cursor is located on the particular text effect item.

8. The method of claim 7, further comprising:
determining whether a zoom-out request is input when the particular text effect item is activated; and
if it is determined that the zoom-out request is input, reducing the panel to the initial size and displaying the activated text effect item in the text input window.

9. The method of claim 7 or 8, wherein a color of a special character is changed to inform that the special character is activated, if the activated text effect item is the special character.

10. The method of one of claims 7 to 9, wherein a frame color of an image is changed to inform that the image is activated, if the activated text effect item is the image.

11. An apparatus for inputting a text effect item to place various effects on text, the apparatus comprising:
a user interface, which provides key input data according to a text input of a user and has a zoom-in key and a zoom-out key;
a controller for displaying a text cursor in a text input window, if the text input window is activated in a text editing mode, the text cursor obtained by reducing an initial size of a panel in which at least one text effect item is disposed and adding the reduced panel to a portion of a cursor image indicating a text input location, magnifying the size of the panel of the text cursor if a zoom-in request is input, and if a particular text effect item is selected from the panel, reducing the panel to the initial size and displaying the selected text effect item in the text input window; and
a display unit for displaying the input text and the selected text effect item in the text input window while displaying the text cursor in the text input location under a control of the controller.

12. The apparatus of claim 11, wherein the text effect item includes at least one of special characters, images and sounds.

13. The apparatus of claim 11 or 12, wherein a clipboard for simultaneously inputting a plurality of text effect items is disposed in the panel of the text cursor.

14. The apparatus of one of claims 11 to 13, wherein the controller moves a graphic input device cursor for selecting an object displayed on a screen according to a user's selection, and activates the text input window when the moved graphic input device cursor is located on the text input window.

15. The apparatus of one of claims 11 to 13, wherein the controller moves a graphic input device cursor for selecting a text effect item in the panel of the text cursor according to a user's selection when the panel of the text cursor is magnified, and activates the particular text effect item in the panel of the text cursor when the moved graphic input device cursor is located on the particular text effect item.

16. The apparatus of one of claims 11 to 15, wherein the controller determines whether a zoom-out request is input when the particular text effect item is activated, and if it is determined that the zoom-out request is input, the controller reduces the panel to the initial size and displays the activated text effect item in the text input window.
